# EUROPEAN PATENT APPLICATION

(11) **EP 1 477 888 A2**
(43) Date of publication of application: **17.11.2004**
(21) Application number: 04001237.9
(22) Date of filing: 21.01.2004
(51) Int. Cl.: G06F 3/033

(54) **Interferometer based navigation device**

(30) Priority: 16.05.2003 US 439674
(71) Applicant: Agilent Technologies, Inc., Palo Alto, CA 94306 (US)
(72) Inventor: Xie, Tong, San Jose CA 95121 (US)
(74) Representative: Liesegang, Roland, Dr.-Ing.

(57) **Abstract**

An optical navigation device (101, 434) for determining movement relative to an object includes a source of optical radiation (103, 411) for illuminating the object (102, 418), and a detector (104, 416) for capturing phase patterns in the optical radiation returning (112, 412") from the object. The phase patterns are correlated with optical nonuniformities (502) of the object. A system is provided for controlling a positional pointer on a computer screen (632) using a mouse (634, 741) to detect movement (107-108, 512-514) relative to an object (102, 418). The system creates interferograms (521-524), each such interferogram being unique to a portion of the object over which the mouse moves, and converts (105) successive pairs of unique interferograms into signals corresponding to relative movement between the mouse and the object. The source (103, 411) of optical radiation may be selected from a list including diode emitters, LEDs, multimode vertical-cavity surface-emitting lasers (VCSELs), laser diodes, and white light.

## Description

### TECHNICAL FIELD

This disclosure relates to motion sensing devices and more particularly to systems and methods for using optical phase pattern images to determine relative motion.

### BACKGROUND OF THE INVENTION

Existing optical relative motion detection devices utilize image correlation techniques to determine relative motion between the device and a surface by capturing images of the surface as the device passes over the surface (or equivalently as the surface moves past the device). Both the distance and the direction of the device movements are determined by comparing one image with the next. This technique typically detects intensity variations of shadows on surfaces; and its sensitivity and usability depends on the intensity contrast in the captured surface images. Relative motion sensors are used, for example, for computer pointer (e.g., mouse) control. Such pointers typically use optics to control the position of the pointer on the computer screen.

Patents 5,786,804; 5,578,813; 5,644,139; 6,442,725; 6,281,882; and 6,433,780 describe examples of optical mice, other hand-held navigation devices, and hand-held scanners. These patents are hereby incorporated by reference.

Typical existing devices do not function well on specular or gloss surfaces, uniform surfaces, or surfaces with shallow features, for example glass or white board. In such devices, in order to improve image contrast, specular reflections are usually blocked, and only the scattered optical radiation from the surface is captured. This approach significantly limits the efficiency of power and optical radiation usage. Also, the surface used typically must be capable of casting shadows. Generally this means that the surface features to be observed must have dimensions in the geometric optics range for the wavelength of the optical radiation used. Accordingly, inefficient use of power and restriction to specific surface types are typical shortcomings of the current optical mouse design.

### BRIEF SUMMARY OF THE INVENTION

In accordance with the invention, an optical navigation device for determining movement relative to an object is provided. The device includes a source of optical radiation for illuminating the object, and a detector for capturing phase patterns in the optical radiation after the optical radiation returns from the object. The phase patterns are correlated with optical nonuniformities of the object. Optical radiation, as referred to herein, includes electromagnetic radiation over a wavelength range extending from about 1 nanometer (nm) to about 1 millimeter (mm). An optical nonuniformity, as referred to herein, includes any intentional and unintentional surface or volume irregularity, for example granularity, topographic, reflectivity, spectral, or scattering inhomogeneities or irregularities, that is capable of interaction with a beam of optical radiation, in which a phase pattern in the interacting beam of optical radiation is modified.

In accordance with the invention, a method for determining relative movement between an optical navigation device and an object includes providing a beam of optical radiation for illuminating the object, and determining phase patterns in the optical radiation after the optical radiation returns from the object.

In accordance with the invention, a method of controlling the display of relative movement between a sensor and an object includes creating a series of interferograms as the sensor moves relative to the object, and displaying a visual representation of the relative movement as a function of the correlation between successive pairs of the created interferograms.

In accordance with the invention, a system is provided for controlling a positional pointer on the screen of a computer, using a mouse to detect movement relative to an object. The system includes means for creating interferograms, each such interferogram being unique to a portion of the object over which the mouse moves, and means for converting successive pairs of unique interferograms into signals corresponding to relative movement between the mouse and the object.

### BRIEF DESCRIPTION OF THE DRAWING

FIGURE 1 is a high level block diagram representing a system for optical navigation, in accordance with the invention;

FIGURE 2 is a flow diagram depicting the operations involved in a method of using the optical navigation system of FIGURE 1, in accordance with the invention;

FIGURES 3A-3C are diagrams illustrating basic principles of phase pattern modification relating to optical navigation, in accordance with the invention;

FIGURES 3D-3E are diagrams illustrating a parallel plate interferometer for application in a phase detector, in accordance with the invention;

FIGURES 3F-3G are diagrams illustrating common alternative interferometer types in accordance with the invention, including Michelson (Twyman-Green) and Mach-Zehnder interferometers;

FIGURE 4 is a representation of an embodiment in accordance with the invention, showing a navigation device including an optical radiation source generating optical radiation rays incident on a collimating element;

FIGURES 5A-5B are representations depicting interferograms generated at different relative positions between a device and a surface, in accordance with the invention;

FIGURES 6A-6B are depictions of a system in accordance with the invention, having a fixed surface, over which an optical mouse moves; and

FIGURE 7 is a depiction of an alternative system in accordance with the invention, in which a navigational device is contained within (or is part of) a stationary surface, and in which phase-patterned rays are reflected from a moving surface.

### DETAILED DESCRIPTION OF THE INVENTION

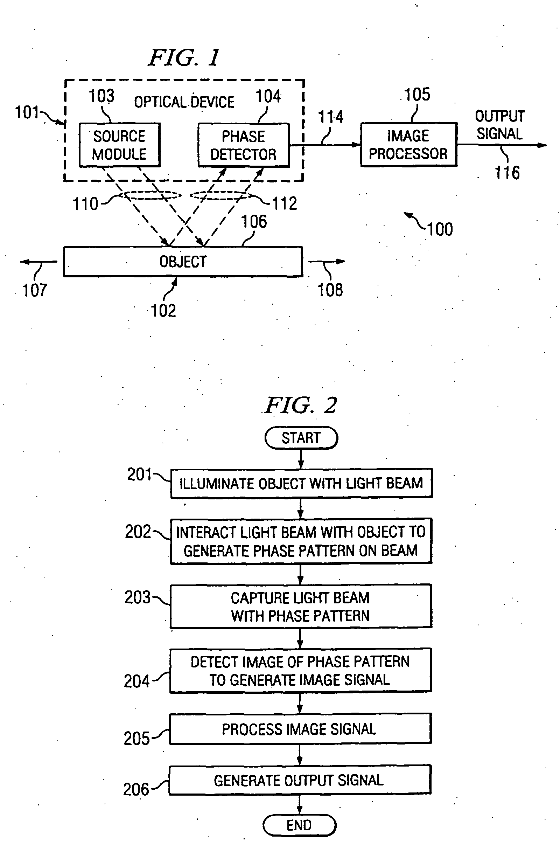

FIGURE 1 is a high level block diagram representing system 100 for optical navigation, in accordance with the invention. FIGURE 2 is a flow diagram depicting the operations involved in a method of using optical navigation system 100, in accordance with the invention. Optical navigation system 100 determines relative position between optical device 101 and object 102, which may be in motion (as represented by arrows 107, 108) in any direction in a two-dimensional plane relative to optical device 101.

In operation 201, object 102 is illuminated with beam of optical radiation 110 from source module 103 of optical device 101. In operation 202, beam of optical radiation 110 is processed by interaction with object 102, such that phase patterns in beam of optical radiation 110 are modified in exit beam of optical radiation 112 propagating from (e.g., transmitted through or reflected from) object 102. In some embodiments in accordance with the invention, the phase pattern in exit beam of optical radiation 112 is modified through interaction of beam of optical radiation 110, for example, by reflection or scattering, with surface 106 of object 102. Alternatively, for example, the phase pattern may be modified through interactions occurring during transmission of beam of optical radiation 110 through the volume of object 102. In operation 203, phase-patterned exit beam of optical radiation 112 is captured by phase detector 104.

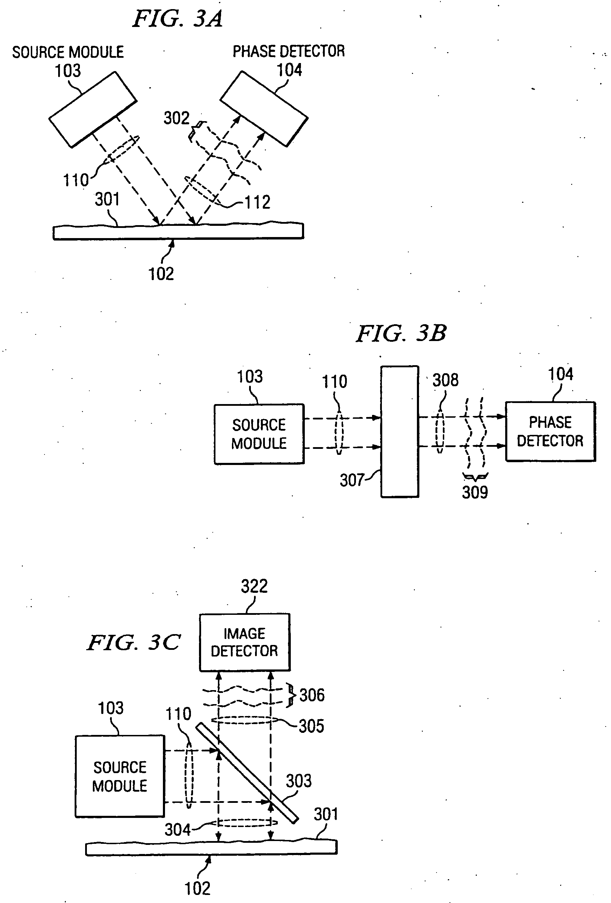

FIGURES 3A-3C are diagrams illustrating basic principles of phase pattern modification relating to optical navigation, in accordance with the invention. In FIGURE 3A, beam of optical radiation 110 from source 103 illuminates and is reflected from surface 301 of object 102. For purposes of illustration, beam of optical radiation 110 is shown as collimated, and surface 301 is depicted as an irregularly rough surface, although in accordance with the invention neither collimation nor an irregularly rough surface is required. Reflected beam of optical radiation 112 exiting from surface 301 includes phase patterns 302 resulting from interaction of beam of optical radiation 110 with surface 301. Phase patterns 302 are uniquely characteristic of the properties of the particular portion of surface 301 that is illuminated by beam of optical radiation 110. Reflected beam of optical radiation 112 is captured and processed by phase detector 104, which generates a signal from which the information contained in phase patterns 302 can then be extracted. Additionally, phase detector 104 can be configured to further process phase-patterned beam of optical radiation 112 prior to capturing, as described below in more detail.

FIGURE 3B depicts phase-pattern modifying of beam of optical radiation 110 from source 103 by transmission through object 307, which typically contains volume optical nonuniformities. As in FIGURE 3A, transmitted beam of optical radiation 308 carrying phase patterns 309 is captured and further processed as required by phase detector 104. Phase patterns 309 are uniquely characteristic of the specific volume portion of object 307 traversed by beam of optical radiation 110. In FIGURE 3C, similar to FIGURE 3A, beam of optical radiation 110 from source 103 is reflected and its phase pattern modified by surface 301 of object 102. However, beam of optical radiation 110 is first horizontally incident on beam splitter 303, which partially reflects beam portion 304 downward onto surface 301. Reflected beam of optical radiation 305 carrying phase patterns 306 is then partially transmitted upward through beam splitter 303 and is captured and further processed as required by image detector 322.

Referring again to FIGURES 1 and 2, in operation 204, phase detector 104 captures an image of phase-patterned exit beam of optical radiation 112 and generates image signal 114. Detection may be performed by an array imager, for example, a CCD, CMOS, GaAs, amorphous silicon, or any other suitable detector array. Typically, the wavelength spectrum in beam of optical radiation 110 emitted from source module 103 is matched to the wavelength response of the array imager. Image signal 114 is then transmitted to image processor 105, where in operation 205, the image is further processed, and in operation 206, output signal 116 is generated in response to image signal 114. For example, in image processor 105, image processing to determine relative movement can be performed traditionally using correlation algorithms that compare successive pairs of images. In some embodiments in accordance with the invention, timing signals may be utilized to determine relative velocity. Output signal 116 may be configured, for example, to drive the position of a pointer on a computer screen.

Source module 103 and phase detector 104 are typically packaged together in optical device 101 for optical integrity. Optionally, image processor 105 may also be packaged in optical device 101, but may alternatively be located elsewhere in optical navigation system 100. In some embodiments in accordance with the invention, optical device 101 is represented by an optical mouse for a computer system, and is optionally hand-movable by a user.

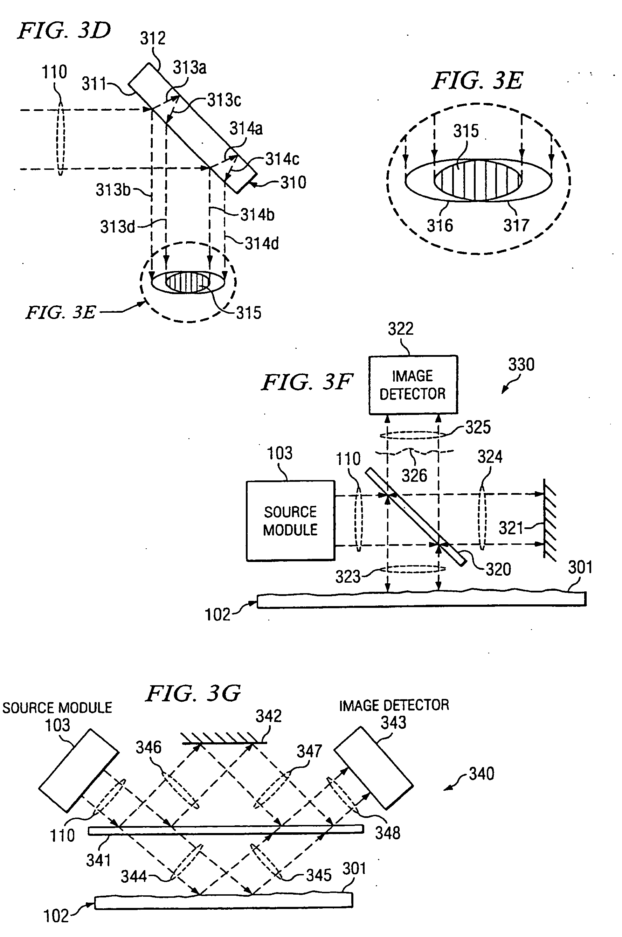

FIGURES 3D-3E are diagrams illustrating a parallel plate interferometer for application in a phase detector, in accordance with the invention. Beam of optical radiation 110 is directed onto parallel plate 310 having front surface 311 parallel to back surface 312. At front surface 311, beam of optical radiation 110 is partially reflected, as represented by rays 314a, 314b, and is partially refracted, as represented by rays 313a, 314a. Refracted rays 313a, 314a are then partially reflected by back surface 312 into respective reflected rays 313c, 314c, which are then refracted by front surface 311 into respective transmitted rays 313d, 314d, defining a beam of optical radiation that overlaps and is offset relative to the reflected beam of optical radiation defined by rays 314a, 314b. As shown in the detail diagram of FIGURE 3E, each of the offset beams illuminates an area 316, 317, and both offset beams mutually illuminate an overlap area 315. Since both offset beams originate from single beam of optical radiation 110, they generate an interference pattern in overlap area 315. The interference pattern corresponds to the slope of the phase function in the shear direction in the two overlapped beams.

In accordance with the invention, an interferometer is typically incorporated into phase detector 104, to process phase-patterned beam of optical radiation 112 prior to image capture. Optical interferometry, which forms the basis of concepts discussed herein, has been widely used for surface characterization and measurements (see for example D. Malacara, "Optical Shop Testing," Wiley-Interscience, ISBN 0471522325, 2nd Ed., January 1992, Chapters 1-7, hereby incorporated by reference). Advantages of interferometry typically include subwavelength-scale sensitivity and accuracy.

The parallel plate structure of FIGURE 3D can be recognized as a variety of a typical shearing interferometer, in which optical interference results from spatial overlapping between a phase-patterned optical field with a displaced version of the phase-patterned optical field. The observed interference fringes can be directly related to the slope of the phase function of the original optical field and consequently to the slope function of the surface topography. Shearing interferometers are widely used for surface characterization. Shearing interferometers are more robust, less sensitive to vibrations or temperature changes than other types of interferometers, because of their common path configuration. This common path configuration allows the use of optical sources with low coherence. Low coherence, as referred to herein, includes both low temporal coherence, i.e., broadened spectral width or lack of strong correlation between the amplitude and/or phase of optical radiation from the source at any one time and at earlier or later times, and low spatial coherence, i.e., lack of strong correlation between the instantaneous amplitudes and between the instantaneous phase angles of the wavefront at any two points across the beam of optical radiation from the source (see for example A. E. Siegman, "Lasers," University Science Books, 1986, pp. 54-55). Low coherence optical sources include, for example, diode emitters, such as LEDs, multimode vertical-cavity surface-emitting lasers (VCSELs), and other multimode laser diode types, or white light (see for example J. C. Wyant, "White Light Extended Source Shearing Interferometer," Applied Optics, Vol. 13, No. 1, January 1974, pp. 200-202, hereby incorporated by reference). For example, a low threshold VCSEL source (typically using a current of about 2 mA) may be used to reduce power consumption compared to traditionally used LEDs (which typically use a current of about 30 mA). Referring again to FIGURE 3C, it is recognized that the structure depicted therein can be considered a variety of shearing interferometer.

Although the shearing interferometer typically provides advantages over other type of interferometers, the optical navigation techniques in accordance with the invention are not limited to shearing interferometry, and different types of interferometers may be utilized according to desired specific applications. Alternative types of interferometers that may be used in accordance with the invention include, for example, Michelson (Twyman-Green), Mach-Zehnder, Fizeau, and interferometer implementations having single or multiple diffractive elements. For more detailed discussion of these interferometers, see for example D. Malacara, "Optical Shop Testing," Wiley-Interscience, ISBN 0471522325, 2nd Ed., January 1992, Chapters 1-7, which has been incorporated by reference.

FIGURES 3F-3G are diagrams illustrating common alternative interferometer types in accordance with the invention, including Michelson (Twyman-Green) and Mach-Zehnder interferometers. FIGURE 3F is a diagram illustrating the principles of a Twyman-Green interferometer. This is similar to the structure depicted in FIGURE 3C. Beam of optical radiation 110 is partially reflected from beam splitter 320 as reflected beam of optical radiation 323, which illuminates irregular surface 301 of object 102. However, the portion of beam of optical radiation 110 transmitted through beam splitter 320 as transmitted beam of optical radiation 324 is reflected back onto beam splitter 320 by mirror 321, and is then partially reflected upward. Upwardly reflected beam of optical radiation 324 then overlaps with beam of optical radiation 325 carrying phase pattern 326 after reflection from surface 301. Overlapping beams 324 and 325 are captured by image detector 322.

In FIGURE 3G, at beam splitter 341, Mach-Zehnder interferometer partially reflects beam of optical radiation 110 from source 103 as reference beam 346 and partially transmits beam of optical radiation 110 as transmitted beam 344, which then reflects from surface 301 of object 102 as reflected beam 345. Reference beam 346 reflects from reference mirror 342 as reflected reference beam 347, which then reflects at beam splitter 341. Reflected beam 345 transmits through beam splitter 341, where it overlaps reflected reference beam 347 to produce overlapped beam 348. Overlapped beam 348 is then captured and processed by image detector 343.

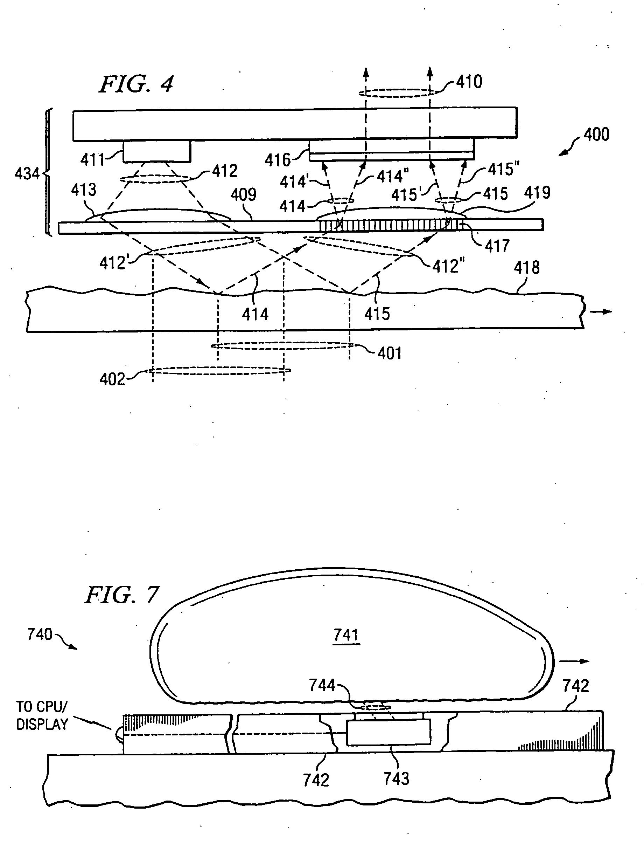

FIGURE 4 is a representation of embodiment 400 in accordance with the invention, showing navigation device 434 including optical radiation source 411. Optical radiation source 411 provides optical radiation rays 412 incident on collimating element 413 to produce collimated rays 412'. Rays 412' need not be collimated, and consequently collimating element 413 is an optional element of optical radiation source 411. If used, collimating element 413 can be any appropriate optical element, for example, a diffractive or refractive lens, to collimate optical radiation rays 412. In some embodiments in accordance with the invention, source 411 emits optical radiation in the visible wavelength range, but the system may be configured to work with optical radiation in other wavelength ranges, for example, in the infrared (IR) region, where silicon detector responsivity peaks.

Rays 412' illuminate surface 418 at non-normal incidence, such that they reflect as rays 412" from a portion of surface 418 identified as area 401. Because of surface imperfections (typically present, unless the surface is optically polished) or other nonuniformities, for example intentional granularity, on area 401, different rays 412" will have different times of travel, resulting from different surface heights at different points of refection. The different travel times of different rays produce phase differences between different rays, generating phase patterns on rays 412".

Embodiment 400, in accordance with the invention, includes transmissive diffraction grating 417 through which phase-patterned rays 412" propagate and are processed prior to image capture by array imager 416. Grating 417 changes the angle of at least a portion of each of phase-patterned rays 412". For example, ray 414 is diffracted into two different diffraction orders (represented as rays 414' and 414"), and ray 415 is likewise diffracted into two different diffraction orders (represented as rays 515' and 515"). This then produces two offset phase-patterned beams represented by rays 414'-415' and 414"-415" respectively defining overlap area 410 where rays 414" and 415' (and all rays therebetween) interfere, i.e. add or subtract, depending upon their relative phases with each other. Accordingly, diffraction grating 417 effectively performs the function of a shear plate, as depicted in FIGURES 3D-3E.

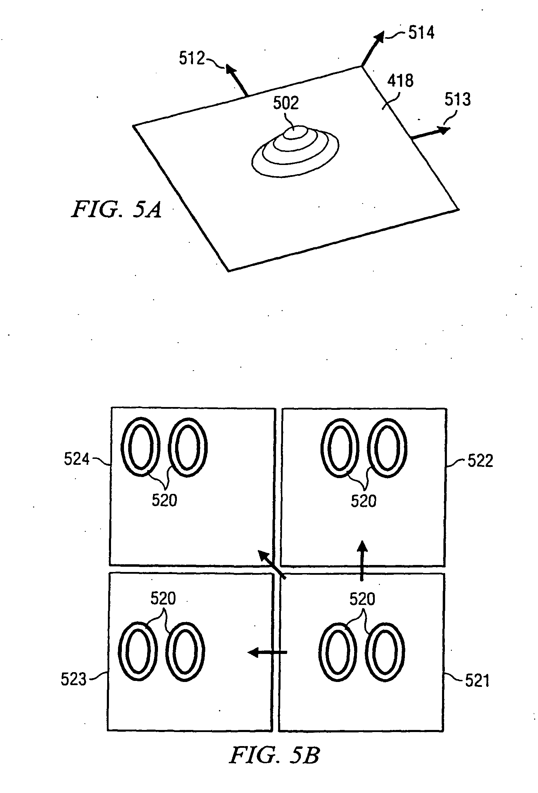

Focusing element 419 between diffraction grating 417 and array imager 416 focuses an image of surface 418 through diffraction grating 417 onto array imager 416. This projects an interferogram onto array imager 416, which detects the interferogram and generates an image signal. Optionally, focusing element 419 and diffraction grating 417 may be combined into a single monolithic or integrated structure. FIGURES 5A-5B are representations depicting interferograms generated at different relative positions between device 434 and surface 418, in accordance with the invention. Interferogram 521 of FIGURE 5B shows a contour image 520 representing phase patterns imposed on rays 412' reflected from area 401 by a small bump 502 of approximately 6 micrometer (µm) height on surface 418, as shown in FIGURE 5A. Interferogram 521, as represented in FIGURE 5B, is uniquely dependent upon area 401 (for example, in a range between about 1 mm² and about 4 mm² for a typical computer mouse), where rays 412' reflect from surface 418.

However, if surface 418 were to move relative to navigation device 434, a different unique interferogram would be generated, typically uniquely dependent on the new area of phase-patterned reflection. For example, if surface 418 moves longitudinally relative to navigation device 434, as depicted by arrow 512 in FIGURE 5A, then new area 402 may be imaged, resulting in interferogram 522, in which contour image representation 520 is shifted vertically relative to interferogram 521, as depicted in FIGURE 5B. Similarly, interferogram 523 in FIGURE 5B, in which contour image representation 520 is shifted horizontally relative to interferogram 521, could be generated from rays 412' falling on surface 418 as device 434 moves laterally, as depicted by arrow 513 in FIGURE 5A, relative to surface 418. Likewise, interferogram 524 in FIGURE 5B, in which contour image representation 520 is shifted diagonally relative to interferogram 521, could be generated from rays 412' falling on surface 418 as device 434 moves diagonally as depicted by arrow 514 in FIGURE 5A, relative to surface 418.

By comparing successive stored interferograms, as represented in FIGURE 5B, relative motion can be determined, such that a correlation calculation of the fringe patterns can be used to determine the distance and the directions of the relative movements. A captured image overlaps partially with a prior captured image. Thus, navigation software algorithms can "look" at specific identifiable points on each image and then calculate the distance and direction of the relative motion. By storing successive image pairs, overlap characteristics can be determined using traditional image correlation algorithms, thereby yielding direction and magnitude of movement. This operation is detailed in U.S. Patent 5,786,804 and is widely used for optical pointing devices which rely on comparison of successive surface images, where the surface images have been generated according to traditional technology by shadows created by optical radiation reflecting from surfaces. By using the interferometric techniques in accordance with the invention, relative movement even over very smooth surfaces, for example, glass (but typically not optically polished surfaces) can be determined.

Diffraction grating 417 may be replaced, for example, with parallel plate, prism, dual or multiple gratings, or any optical element that performs the function of a shear plate, i.e., that enables shearing interferometry.

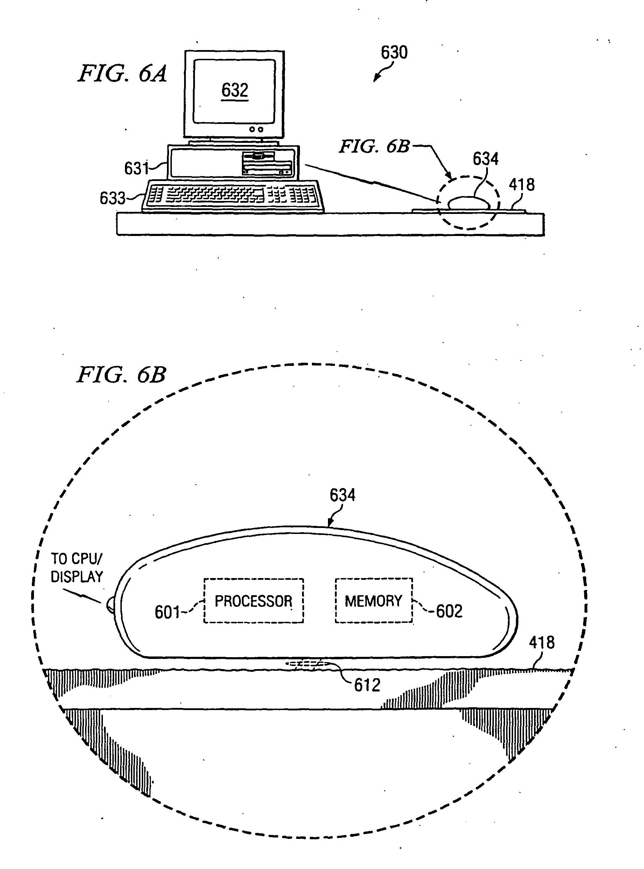

FIGURES 6A-6B are depictions of system 630, in accordance with the invention, having fixed surface 418, over which optical mouse 634 moves. Optical mouse 634 typically includes a phase detector, similar to phase detector 104 depicted in FIGURE 1. Rays 612 (FIGURE 6B) reflect from surface 418 (as described in connection with FIGURE 4), and successive series of position images, usually represented in the form of a small arrow or pointer, are sent via wire or wirelessly to CPU 631 for display on display screen 632. Typically, the positional calculations are performed internal to mouse 634, for example, by processor 601 and memory 602. However, it is possible to send raw data (or other intermediate data) from the phase detector to CPU 631 for processing. CPU 631 typically is interconnected with a user input device, for example keyboard 633.

FIGURE 7 is a depiction of system 740 in accordance with the invention, in which navigational device 743 is contained within (or is part of) surface 742, and in which phase-patterned rays 744 are reflected from moving surface 741. Device 743 typically includes a phase detector similar to phase detector 104 depicted in FIGURE 1. Note that both device 743 and surface 741 may be moving relative to one another. The two structures (device 743 and surface 741) need not be close to each other, provided the optical components and design allow phase-patterned rays 744 reflected from surface 741 to be captured by the phase detector in device 743.

While the invention has been described in conjunction with specific embodiments, it is evident to those skilled in the art that many alternatives, modifications, and variations will be apparent in light of the foregoing description. Accordingly, the invention is intended to embrace all other such alternatives, modifications, and variations that fall within the spirit and scope of the appended claims.

## Claims

1. An optical navigation device for determining movement (107, 108) relative to an object (102), said device comprising:
a source (103) of optical radiation for illuminating (110) said object (102); and
a detector (104) for capturing phase patterns (112) in said optical radiation after said optical radiation returns from said object (102), wherein said phase patterns (112) are correlated with optical nonuniformities (502) of said object (102, 418).

2. The optical navigation device of claim 1 further comprising an interferometric element (417) for converting said phase patterns (412") to interference patterns (521-524) captured by said detector (416).

3. The optical navigation device of claim 2 wherein said interferometric element (417) is a shearing element (303, 310) positioned between said object (102) and said detector (322, 416) for creating an interference overlap (315) between said phase patterns.

4. The optical navigation device of one of claims 1 to 3 wherein said navigation device is operative to control a pointing device for use with a computer (630), and wherein said navigation device is moved (512-514) relative to said object.

5. The optical navigation device of claim 4 comprising a hand-controlled mouse (634) operative for controlling a positional pointer on the display (632) of a computer (630, 631).

6. The optical navigation device of claim 2 wherein said interferometric element is operative to construct a series of interferograms (521-524) as said navigation device and said object (418) move (512, 514) relative to one another, each said constructed interferogram being a representation of the structure of a specific portion of said object (418).

7. The optical navigation device of claim 6 further comprising an image processor 105 operative to process said interferograms captured by said detector, wherein a first one of said interferograms is correlated with at least one subsequent one of said interferograms to determine said relative motion between said navigation device and said object portions corresponding to said interferograms.

8. The optical navigation device of one of claims 1 to 7 wherein said source (103, 411) of optical radiation is selected from the list of diode emitters, LEDs, multimode vertical-cavity surface-emitting lasers (VCSELs), laser diodes, and white light.

9. A method for determining relative movement (107,108; 512-514) between an optical navigation device (101, 434) and an object (102, 418), said method comprising:
providing a beam (110, 412") of optical radiation for illuminating said object; and
determining (416) phase patterns (412") in said optical radiation after said optical radiation returns from said object, wherein said phase patterns are correlated with optical nonuniformities (502) of said object.

10. The method of claim 9 wherein said providing (411) of said optical radiation and said determining (416) are performed within said optical navigation device (434).

11. An optical mouse (634, 741) for determining movement relative to an object (418), said relative movement operative for controlling a positional pointer on the screen of a computer (630, 632), said mouse comprising:
an interferometer (417) for establishing interferograms (521-524), each said interferogram being unique to a portion of said object (418) corresponding to the relative position of said mouse; and
at least one processor (601) for converting pairs of said unique interferograms into signals corresponding to relative movement between said mouse and said object.

12. The optical mouse of claim 11 further comprising:
a source of optical radiation adapted for illuminating (612) said object, such that said optical radiation is reflected from a surface of said object (418) at different points of said surface, wherein a phase pattern between different portions of said reflected optical radiation from each said point is modified at least in part by the surface structure at said point of reflection.
